# EUROPEAN PATENT APPLICATION

(11) **EP 2 075 421 A1**
(43) Date of publication of application: **01.07.2009**
(21) Application number: 07255082.5
(22) Date of filing: 28.12.2007
(51) Int. Cl.: F01L 1/344, F16K 11/072

(54) **Fluid control valve for a cam phaser**

(71) Applicant: Delphi Technologies, Inc., Troy, Michigan 48007 (US)
(72) Inventor: Berndorfer, Axel, 54453 Nittel (DE)
(74) Representative: Waller, Stephen

(57) **Abstract**

A fluid control valve for selectively controlling the flow of oil to timing advance and retard chambers within a cam phaser and to a cam phaser locking pin comprises a sleeve having an inlet for connection to a source of high pressure oil, a first outlet for connection to a timing advance chamber of the cam phaser, a second outlet for connection to a timing retard chamber of the cam phaser and a third outlet for connection to an actuating chamber of a cam phaser locking pin, a valve spool being rotatably mounted within the sleeve and having channels and/or apertures formed in its outer surface for controlling the flow of oil from the inlet to the first, second and third outlets in dependence upon the rotary position of the spool within the sleeve, wherein the spool is operable in a first configuration wherein the spool is rotatable between a first position, wherein the channels and/or apertures provide fluid communication between the inlet and said first outlet and close fluid communication between the fluid inlet and said second and third outlets, and a second position, wherein said channels and/or apertures provide fluid communication between the inlet and said second outlet and close off fluid communication between the inlet and the first and third outlets, and wherein the spool is operable in a second configuration wherein the spool is rotatable between a third position, wherein said channels and/or apertures provide fluid communication between the inlet and both of said first and third outlets and close off fluid communication between the inlet and said second outlet, and a fourth position, wherein the channels and/or apertures provide fluid communication between the inlet and both the second and third outlets and close off fluid communication between the inlet and the first outlet.

## Description

The present invention relates to a fluid control valve for a cam phaser.

Cam phasers for internal combustion engines are well known. The engine's crankshaft is normally drivingly connected to the camshaft via a chain or belt running on sprockets or pulleys. Typically, a cam phaser is disposed between the camshaft drive sprocket (drive member) and the camshaft (driven member) to permit adjustment of angular orientation of the camshaft with respect to the crankshaft. Typically, pressurized oil from an oil gallery in the engine block is selectively distributed to timing advance and retard chambers within the phaser by means of suitable oil control valve to controllably vary the phase relationship between the engine's crankshaft and camshaft. In a vane-type cam phaser, the chambers are formed between inwardly-extending lobes of a generally cylindrical stator and outwardly-extending vanes of a rotor concentrically disposed within the stator.

During initial engine start up and shut down, it is desirable to rotationally lock the drive and driven members of the cam phaser. This is required to guarantee a proper engine start up with a specific cam timing and to avoid damage to the cam phaser and potentially the engine which might occur due to incorrect operation of the cam phaser and thus incorrect cam timing at engine start up due to low oil pressure, particularly if oil within the cam phaser mechanism has drained away while the engine has been inoperative.

For this purpose, prior art cam phaser assemblies have included a locking pin arranged to lock the drive and driven members of the cam phaser assembly at an end position of the cam phaser range of angular adjustment, either fully retarded or fully advanced.

The mechanism typically includes a bore disposed in one of the drive or driven members and a spring-biased locking pin disposed therein. The locking pin is spring biased to lock into a corresponding receiving aperture in the other of the drive or driven member whenever the pin and receiving aperture are rotationally aligned at either the fully retarded or fully advanced positions of the cam phaser. An oil well is located on one side of the pin and communicates with a passageway supplied with oil from the oil pump to force the pin from the receiving aperture to enable the cam phaser to operate while the engine is operating and to enable the locking pin to be automatically urged into the receiving aperture to lock the drive and driven members together when the oil pressure falls below that required to overcome the biasing force of the spring bias as the engine is switched off. Although the cam phaser becomes uncontrollable when the oil pressure falls, the cam phaser is moved to an end position of the cam phaser range and the locking pin is automatically brought into alignment with the receiving aperture by virtue of the torque applied to the camshaft by the valve springs.

This known mechanism works satisfactorily when the locking pin is required to lock the cam phaser in one of its end positions. However, such arrangement is not satisfactory when the locking pin is required to lock the cam phaser at a position between its end positions, as is increasingly required due to increased range of cam phase variation required during engine operation, because when the engine shuts down, such that the oil pressure falls to a level where the locking pin is urged towards the receiving aperture by the spring, the cam phaser can no longer control the relative angular orientation of the camshaft with respect to the camshaft and thus cannot align the locking pin with its receiving aperture to allow the locking pin to enter the receiving aperture. Thus it is desirable to provide positive control of the movement of the locking pin by means of a suitable oil control valve, wherein the oil supply to the locking pin can be shut off while the cam phaser is still operational to enable the cam phase to be adjusted to a locking position between a fully retarded and fully advanced position and to enable the locking pin to be engaged into its receiving aperture while said cam phase control is maintained.

According to the present invention there is provided a fluid control valve for selectively controlling the flow of oil to timing advance and retard chambers within a cam phaser and for simultaneously controlling the supply of oil to a cam phaser locking pin, said fluid control valve comprising a valve body defining a hollow valve chamber having a fluid inlet for connection to a source of high pressure oil, a first fluid outlet for connection to a timing advance chamber of the cam phaser, a second fluid outlet for connection to a timing retard chamber of the cam phaser and a third fluid outlet for connection to an actuating chamber of a cam phaser locking pin, a valve spool being rotatably mounted within the chamber and having fluid control means defined by a plurality of channels and/or apertures formed in the outer surface thereof for controlling the flow of oil from the fluid inlet to the first, second and third fluid outlets in dependence upon the rotary position of the spool within the chamber, an actuator being provided for rotating the spool to a desired rotary position within the chamber, wherein the spool is operable in a first configuration wherein the spool is rotatable between a first position, wherein one or more of said plurality of channels and/or apertures are arranged to provide fluid communication between the fluid inlet and said first fluid outlet and to close off fluid communication between the fluid inlet and said second and third fluid outlets, and a second position, wherein one or more plurality of said channels and/or apertures are arranged to provide fluid communication between the fluid inlet and said second fluid outlet and to close off fluid communication between said fluid inlet and said first and third fluid outlets, and wherein the spool is operable in a second configuration wherein the spool is rotatable between a third position, wherein one or more of said plurality of channels and/or apertures are arranged to provide fluid communication between the fluid inlet and both of said first fluid outlet and said third fluid outlet and to close off fluid communication between the fluid inlet and said second fluid outlet, and a fourth position, wherein one or more plurality of said channels and/or apertures are arranged to provide fluid communication between the fluid inlet and both said second fluid outlet and said third fluid outlet and to close off fluid communication between said fluid inlet and said first fluid outlet.

Therefore the fluid control valve according to the present invention can be operated in said first configuration when it is desired to adjust the relative angular position of the drive and driven members of the cam phaser by selectively supplying oil to timing advance and retard chambers within the phaser while closing off the oil supply to the locking pin such that the locking pin can engage its receiving aperture to lock the cam phaser, and can be operated in a second configuration when it is desired to adjust the relative angular position of the drive and driven members of the cam phaser while oil pressure is supplied to the locking pin to hold the locking pin in its retracted to inactive position.

Preferably the spool is rotated through 180° to change the operation of said spool between said first and second configurations. Preferably said fluid control means is divided into first fluid control means, being provided on one half of the spool for controlling fluid flow through the valve when the valve is in said first configuration, and second fluid control means, being provided on a second half of the spool opposite said first fluid control means for controlling fluid flow through the valve when the valve is in its second configuration. Preferably the fluid inlet and the first, second and third fluid outlet are provided at axially spaced locations on one side of the chamber.

In one embodiment, said first fluid control means comprises a first circumferentially extending channel formed in the outer surface of the spool and arranged to be in alignment with the fluid inlet when the spool is in each of its first and second positions, a first axially extending channel extending from one end of said first circumferentially extending channel, said first axially extending channel being arranged to be in alignment with the first fluid outlet when the spool is in its first position, and a second axially extending channel, extending from an opposite end of said first circumferentially extending channel, said second axially extending channel being arranged to be in alignment with the second fluid outlet when the spool is in its second position, the second fluid control means comprising a second circumferentially extending channel formed in the outer surface of the spool on the opposite half of the spool to said first circumferentially extending channel and arranged to be in alignment with the fluid inlet when the spool is in each of its third and fourth positions, a third axially extending channel extending from one end of said second circumferentially extending channel, said third axially extending channel being arranged to be in alignment with the first fluid inlet when the spool is in its third position, and a fourth axially extending channel extending between an opposite end of said second circumferentially extending channel and a third circumferentially extending channel axially spaced from the second circumferentially extending channel and arranged to be in alignment with the third outlet when the spool is in each of its third and fourth positions, said fourth axially extending channel being arranged to be in alignment with the second fluid outlet when the spool is in its fourth position, said fourth axially extending channel providing fluid communication between said second and third circumferentially extending channels, and therefore between the fluid inlet and the third fluid outlet, when the spool is in each of its third or fourth positions.

Preferably the valve further includes an axial drain outlet connectable to a low pressure drain, the spool having a hollow central chamber communicating with said drain outlet and being provided, the spool including a plurality of apertures extending between the outer surface of the spool and said central chamber and located to selectively provide fluid communication between said first, second and third outlet ports and said drain outlet when the respective port is not in fluid communication with said inlet port. In one embodiment, said plurality of apertures comprise a first aperture arranged to be in alignment with the second fluid outlet when the spool is in its first position, a second aperture arranged to be in alignment with the first outlet when the spool is in its second position, a third aperture extending between a fourth axially extending channel and the central chamber, said fourth axially spaced from the first circumferentially extending channel and arranged to be aligned with the third fluid outlet when the spool is in either of its first and second positions, a fourth aperture arranged to be in alignment with the second fluid outlet when the spool is in its third position and a fifth aperture arranged to be in alignment with the first fluid outlet when the spool is in its fourth position.

The actuator may comprise a stepper motor or an electric motor acting against a return spring with positional feedback control.

According to a further aspect of the present invention there is provided a cam phaser for an internal combustion engine, the cam phaser comprising coaxial drive and driven members drivingly connected by phase control means for selectively varying the relative angular orientation of said drive and driven members, locking means comprising a locking pin provided on one of said drive and driven members for movement between an unlocked position, to allow angular adjustment of said drive and driven members by the phase control means, and a locked position, wherein the locking pin engages a receiving means provided on the other of the drive and driven members to maintain said relative angular orientation between said drive and driven members; biasing means being provided for biasing said locking pin to its locked position; a portion of the locking pin being exposed to a chamber, said chamber being selectively communicable with a source of pressurised fluid whereby pressurisation of said chamber with high pressure fluid urges the locking pin to its unlocked position; a fluid control valve in accordance with the first aspect of the present invention being provided for selectively supplying high pressure oil to the phase control means of the cam phaser and to the locking pin.

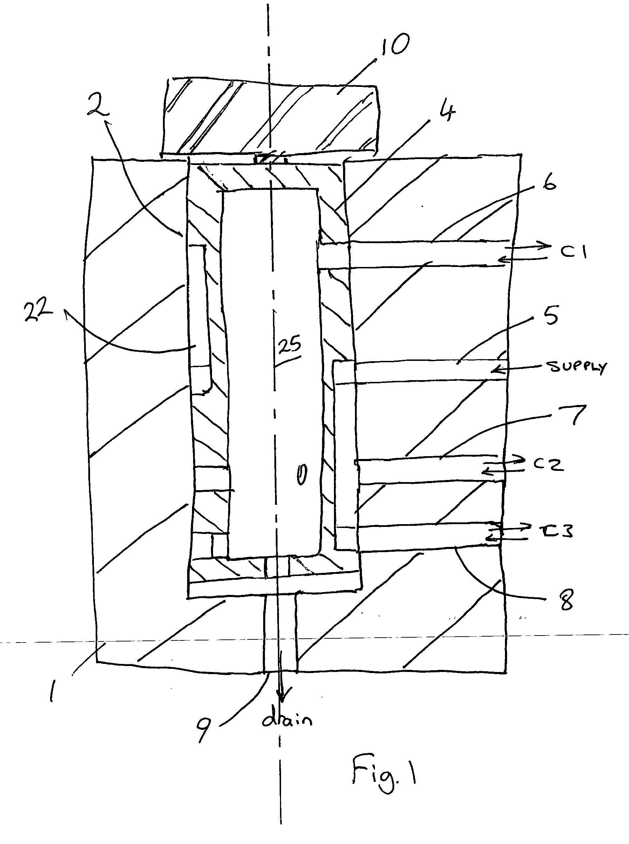

An embodiment of the present invention will now be described with reference to the accompanying drawings, in which:-
Fig. 1 is a sectional view through a fluid control valve according to a first embodiment of the present invention;

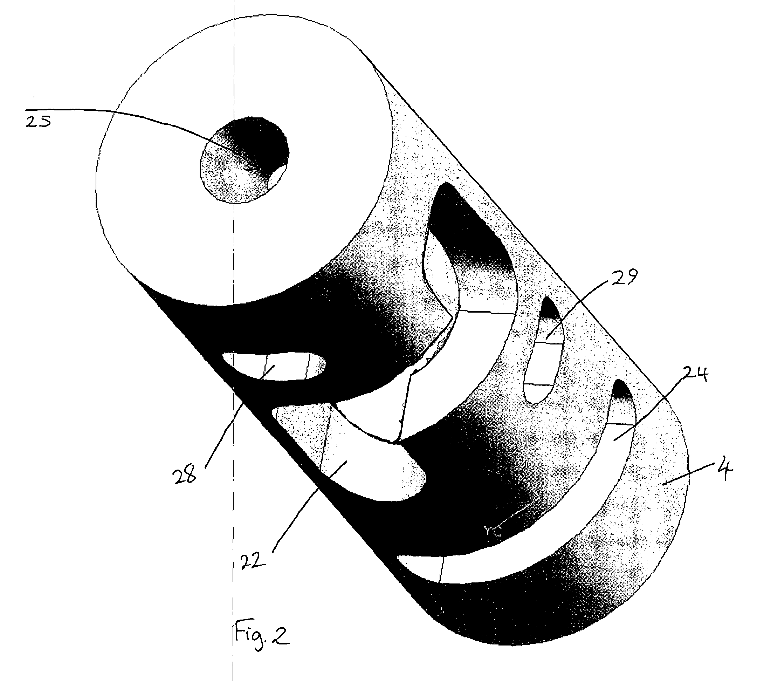

Fig. 2 is a perspective view of the spool of the fluid control valve of Fig. 1;
Fig. 3 is a first side view of the spool of Fig. 2;
Fig. 4 is a second side view of the spool of Fig. 2; and
Fig. 5 is a surface model of the spool of the fluid control valve of Fig. 1.

An oil control valve according to a first embodiment of the present invention for controlling a cam phase adjustment means and a locking pin of a cam phaser comprises a valve body 1 having a cylindrical hollow chamber 2 within which is rotatably mounted a spool 4.

The chamber 2 is provided with an inlet 5 for connection to a source of high pressure oil and first and second outlets 6,7 axially spaced on either side of the inlet 5 for selectively high pressure supply oil to advance and retard chambers of a vane type cam phaser. A third outlet 8, axially spaced below the second outlet 7, is provided for selectively supplying high pressure oil to a locking pin of the cam phaser to withdraw the locking pin and hold the locking pin in an inactive position to allow the relative angular position of the drive and driven members of the cam phaser to be adjusted. The lower end of the chamber is provided with a drain outlet 9 for connection to a lower pressure oil drain or return, such as the engine sump.

The spool 4 can be rotated within the chamber 2 by means of an actuator 10, such as a stepper motor or torque motor acting against a return spring, to selectively supply high pressure oil to the respective outlets 6,7 from the inlet 5 and to connect the respective outlets 6, 7 to the drain outlet 9, as required and as will be described in more detail below.

The external surface 20 of the spool 4 is provided with a plurality of circumferentially and axially extending channels 22,23,24 to control the supply of oil from the inlet 5 to the respective outlets 6,7,8 whereby rotation of the spool 4 brings the various sections of the channels 22,23,24 into and out of alignment with the various outlets 6,7,8. The spool 4 includes a hollow central chamber 25 communicating with the drain outlet 9 of the chamber 2 and includes a number of apertures 26,27,28,29,30 through the side wall of the spool 4, the apertures being located at positions to be selectively brought into alignment with respective one of the first to third outlets 6,7,8 by rotation of the spool 4.

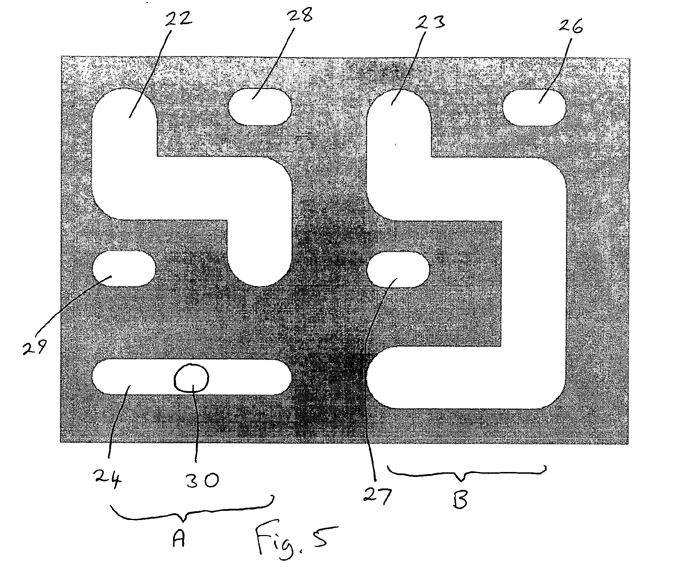

As can be seen from Fig. 5, the surface of the spool is divided into two sections A,B.

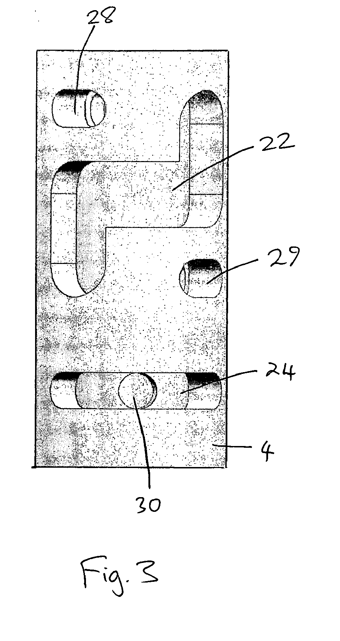

A first section A, as shown in Fig. 3, includes a first array of channels 22,24 and apertures 28,29,30 for operation of the valve in a first configuration wherein high pressure oil can be selectively supplied from the inlet 5 to the first and second outlets 6,7 to control the operation of the cam phaser while the third outlet 8 is connected to the drain outlet 9 to vent the locking pin such that the locking pin is urged to its operative position by means of its return spring. In such configuration, the cam phaser can be selectively operated to move the drive and driven members to their default or base phase adjustment such that the locking pin is aligned with its corresponding receiving aperture and the locking aperture can be urged into its receiving aperture by the return spring to lock the cam phaser, for example during engine shut down.

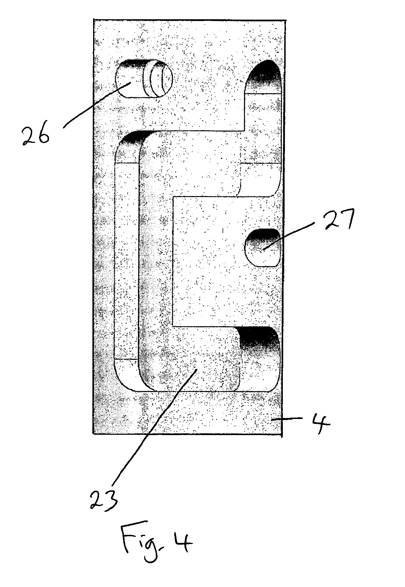

A second section B, as shown in Fig. 4, includes a second array of channels 23 and apertures 26,27 for operation of the valve in a second configuration wherein high pressure oil can be selectively supplied from the inlet 5 to the first and second outlets 6,7 to control the operation of the cam phaser while high pressure oil is also supplied to the third outlet 8 to hold the locking pin in its inoperative position to permit adjustment of the cam phaser during normal engine operation.

The apertures 26,27,28 and 29 provide selective communication between the sides of the cam phaser opposite that connected to the high pressure oil source and the drain 9 to allow the cam phaser to move by avoiding a hydraulic lock in said low pressure sides of the cam phaser.

The first and second sections A, B of the spool are located on diametrically opposed sides of the spool such that the valve can be selectively operated in either its first or second configuration and can be adjusted between said operating configurations by rotating the spool through 180° by means of the actuator.

Various modifications and variations to the described embodiment of the invention will be apparent to those skilled in the art without departing from the scope of the invention as defined in the appended claims. Although the invention has been described in connection with a specific preferred embodiment, it should be understood that the invention as claimed should not be unduly limited to such specific embodiment.

For example, the locking pin may be urged towards its inoperative position by means of the return spring and may be urged to its operative position my means of high pressure oil supplied to the third outlet 8 to hold the locking pin in its operative position to the lock the cam phaser.

## Claims

1. A fluid control valve for selectively controlling the flow of oil to timing advance and retard chambers within a cam phaser and for simultaneously controlling the supply of oil to a cam phaser locking pin, said fluid control valve comprising a valve body defining a hollow valve chamber having a fluid inlet for connection to a source of high pressure oil, a first fluid outlet for connection to a timing advance chamber of the cam phaser, a second fluid outlet for connection to a timing retard chamber of the cam phaser and a third fluid outlet for connection to an actuating chamber of a cam phaser locking pin, a valve spool being rotatably mounted within the chamber and having fluid control means defined by a plurality of channels and/or apertures formed in the outer surface thereof for controlling the flow of oil from the fluid inlet to the first, second and third fluid outlets in dependence upon the rotary position of the spool within the chamber, an actuator being provided for rotating the spool to a desired rotary position within the chamber, wherein the spool is operable in a first configuration wherein the spool is rotatable between a first position, wherein one or more of said plurality of channels and/or apertures are arranged to provide fluid communication between the fluid inlet and said first fluid outlet and to close off fluid communication between the fluid inlet and said second and third fluid outlets, and a second position, wherein one or more plurality of said channels and/or apertures are arranged to provide fluid communication between the fluid inlet and said second fluid outlet and to close off fluid communication between said fluid inlet and said first and third fluid outlets, and wherein the spool is operable in a second configuration wherein the spool is rotatable between a third position, wherein one or more of said plurality of channels and/or apertures are arranged to provide fluid communication between the fluid inlet and both of said first fluid outlet and said third fluid outlet and to close off fluid communication between the fluid inlet and said second fluid outlet, and a fourth position, wherein one or more plurality of said channels and/or apertures are arranged to provide fluid communication between the fluid inlet and both said second fluid outlet and said third fluid outlet and to close off fluid communication between said fluid inlet and said first fluid outlet.

2. A valve as claimed in claim 1, wherein the spool is rotated through 180° to change the operation of said spool between said first and second configurations.

3. A valve as claimed in claim 2, wherein said fluid control means is divided into first fluid control means, being provided on one half of the spool for controlling fluid flow through the valve when the valve is in said first configuration, and second fluid control means, being provided on a second half of the spool opposite said first fluid control means for controlling fluid flow through the valve when the valve is in its second configuration.

4. A valve as claimed in claim 3, wherein the fluid inlet and the first, second and third fluid outlet are provided at axially spaced locations on one side of the chamber.

5. A valve as claimed in claim 4, wherein said first fluid control means comprises a first circumferentially extending channel formed in the outer surface of the spool and arranged to be in alignment with the fluid inlet when the spool is in each of its first and second positions, a first axially extending channel extending from one end of said first circumferentially extending channel, said first axially extending channel being arranged to be in alignment with the first fluid outlet when the spool is in its first position, and a second axially extending channel, extending from an opposite end of said first circumferentially extending channel, said second axially extending channel being arranged to be in alignment with the second fluid outlet when the spool is in its second position, the second fluid control means comprising a second circumferentially extending channel formed in the outer surface of the spool on the opposite half of the spool to said first circumferentially extending channel and arranged to be in alignment with the fluid inlet when the spool is in each of its third and fourth positions, a third axially extending channel extending from one end of said second circumferentially extending channel, said third axially extending channel being arranged to be in alignment with the first fluid inlet when the spool is in its third position, and a fourth axially extending channel extending between an opposite end of said second circumferentially extending channel and a third circumferentially extending channel axially spaced from the second circumferentially extending channel and arranged to be in alignment with the third outlet when the spool is in each of its third and fourth positions, said fourth axially extending channel being arranged to be in alignment with the second fluid outlet when the spool is in its fourth position, said fourth axially extending channel providing fluid communication between said second and third circumferentially extending channels, and therefore between the fluid inlet and the third fluid outlet, when the spool is in each of its third or fourth positions.

6. A valve as claimed in any preceding claim, wherein the valve further includes an axial drain outlet connectable to a low pressure drain, the spool having a hollow central chamber communicating with said drain outlet and being provided, the spool including a plurality of apertures extending between the outer surface of the spool and said central chamber and located to selectively provide fluid communication between said first, second and third outlet ports and said drain outlet when the respective port is not in fluid communication with said inlet port.

7. A valve as claimed in claim 6, when dependent upon claim 5, wherein said plurality of apertures comprise a first aperture arranged to be in alignment with the second fluid outlet when the spool is in its first position, a second aperture arranged to be in alignment with the first outlet when the spool is in its second position, a third aperture extending between a fourth axially extending channel and the central chamber, said fourth axially spaced from the first circumferentially extending channel and arranged to be aligned with the third fluid outlet when the spool is in either of its first and second positions, a fourth aperture arranged to be in alignment with the second fluid outlet when the spool is in its third position and a fifth aperture arranged to be in alignment with the first fluid outlet when the spool is in its fourth position.

8. A valve as claimed in any preceding claim, wherein the actuator comprises a stepper motor.

9. A valve as claimed in any of claims 1 to 7, wherein the actuator comprises an electric motor acting against a return spring.

10. A cam phaser for an internal combustion engine, the cam phaser comprising coaxial drive and driven members drivingly connected by phase control means for selectively varying the relative angular orientation of said drive and driven members, locking means comprising a locking pin provided on one of said drive and driven members for movement between an unlocked position, to allow angular adjustment of said drive and driven members by the phase control means, and a locked position, wherein the locking pin engages a receiving means provided on the other of the drive and driven members to maintain said relative angular orientation between said drive and driven members; biasing means being provided for biasing said locking pin to its locked position; a portion of the locking pin being exposed to a chamber, said chamber being selectively communicable with a source of pressurised fluid whereby pressurisation of said chamber with high pressure fluid urges the locking pin to its unlocked position; a fluid control valve as claimed in any preceding claim being provided for selectively supplying high pressure oil to the phase control means of the cam phaser and to the locking pin.
